Europäisches Patentamt

European Patent Office

Office européen des brevets

(11) Veröffentlichungsnummer: **0 444 701 B1**

(12) # EUROPÄISCHE PATENTSCHRIFT

(45) Veröffentlichungstag der Patentschrift: **18.01.95**

(51) Int. Cl.6: **C09J 5/02**, C09K 3/10

(21) Anmeldenummer: **91103111.0**

(22) Anmeldetag: **01.03.91**

(54) **Verfahren zur Vorbereitung einer Substratoberfläche für die Verklebung mit ativierbaren Klebstoffen durch Aufbringen einer einen Aktivator enthaltenden Schicht auf die Substatoberfläche.**

(30) Priorität: **01.03.90 DE 4006442**

(43) Veröffentlichungstag der Anmeldung:
**04.09.91 Patentblatt 91/36**

(45) Bekanntmachung des Hinweises auf die
Patenterteilung:
**18.01.95 Patentblatt 95/03**

(84) Benannte Vertragsstaaten:
**BE CH DE ES FR GB IT LI NL SE**

(56) Entgegenhaltungen:
**EP-A- 0 326 097**

(73) Patentinhaber: **THERA Patent GmbH & Co. KG
Gesellschaft für industrielle Schutzrechte
Am Griesberg 2
D-82229 Seefeld (DE)**

(72) Erfinder: **Koran, Peter, Dr.
Tassiloring 7
W-8120 Weilheim (DE)**
Erfinder: **Gasser, Oswald, Dr.
Höhenstrasse 10
W-8031 Seefeld (DE)**
Erfinder: **Guggenberger, Rainer, Dr.
Sigl-Strasse 10
W-8036 Herrsching (DE)**

(74) Vertreter: **Abitz, Walter, Dr.-Ing. et al
Patentanwälte Abitz & Partner
Postfach 86 01 09
D-81628 München (DE)**

EP 0 444 701 B1

**Beschreibung**

Die Erfindung betrifft ein Verfahren zur Vorbereitung einer Substratoberfläche für die Verbindung der Substratoberfläche mit Kunststoff, bei welchem durch Sandstrahlen eine Schicht auf die Substratoberfläche aufgebracht wird.

Klebeverbindungen zwischen Substratoberflächen, z.B. aus Holz, Gläsern, Metallen, Keramik oder Kunststoffen, mittels kunststoffhaltiger Kleber oder Beschichtungen von Substraten mit Kunststoffen sollen auch unter den unterschiedlichsten Witterungsbedingungen dauerhaft sein. Die Adhäsionsfestigkeit der Substrat-Kunststoff-Verbindung sollte im Idealfall bei den unterschiedlichsten Belastungen, wie mechanischen oder thermischen Verformungen, stets fester sein als die innere Festigkeit des Kunststoffs (Kohäsionsfestigkeit).

Aus der EP-A-0 326 097 ist ein Verfahren zur Vorbereitung einer Substratoberfläche für die Verbindung mit Kunststoff bekannt, bei welchem man auf die Substratoberfläche eine Schicht durch Sandstrahlen mit einem Mittel aufbringt, das, bezogen auf das Gewicht des Sandstrahlmittels, aus

(A) 0,01 bis 90 Gew.-% gegebenenfalls silanisiertem Material mit einer Korngröße < 5 $\mu$m und einer größeren Härte als die der Substratoberfläche und/oder

(B) 20 bis 100 Gew.-% silanisiertem, siliciumhaltigem Material mit einer mittleren Korngröße von 2 bis 200 $\mu$m und zum

(C) Rest aus einem Sandstrahlmittel mit einer mittleren Korngröße > 5 $\mu$m

besteht, und gegebenenfalls die so erhaltene Haftvermittlerschicht anschließend silanisiert. Ein ähnliches Verfahren ist auch aus der DE-B-38 02 043 bekannt.

Diese zwei Verfahren steigern die Haftfestigkeit von Klebstoffen auf Substraten und die Langzeitstabilität der Verklebung wesentlich, sind jedoch für die Verwendung z.B. anaerober Klebstoffe ungeeignet, da deren Polymerisation und Verklebung nur durch Katalyse, beispielsweise von Metallionen, unter Luftausschluß eingeleitet wird, so daß die bei den beiden Verfahren aufgetragene, dünne anorganische Schicht die Polymerisation der anaeroben Klebstoffe ganz oder zu einem großen Teil verhindert. Auch andere "aktivierbare" Klebstoffe, beispielsweise die sogenannten Cyanacrylatklebstoffe, ergeben mit den oben genannten Verfahren nur geringe Haftwerte.

In diesen Fällen, ebenso wie bei anderen nicht-metallischen Substratoberflächen (z.B. Kunststoffen) kann nur durch Auftragen eines Aktivators, der im Falle der anaeroben Klebstoffe üblicherweise Metallverbindungen enthält, die leicht Ionen freisetzen, die Polymerisation des Produkts angeregt oder beschleunigt werden (vgl. G. Habenicht in "Kleben", Springer Verlag, 1986, S. 15 ff, insbes. S. 18).

Die auf diese Weise erreichte Klebfestigkeit ist jedoch unbefriedigend.

Aufgabe der vorliegenden Erfindung ist es daher, Substratoberflächen so vorzubehandeln, daß adhäsive Verklebungen auch auf Nichtmetalloberflächen durch den Einsatz aktivierbarer, insbesondere anaerober Klebstoffe möglich werden.

Gleichzeitig soll die Oberflächenbehandlung eine verbesserte Langzeitbeständigkeit der Verklebung bewirken, insbesondere bei erschwerten Umweltbedingungen, wie erhöhten Temperaturen, starken Temperaturwechseln, Luftfeuchtigkeit und aggressiven Medien wie Säuren und Laugen.

Diese Aufgabe wird dadurch gelöst, daß dem Sandstrahlmittel ein Aktivator zugemischt wird, wodurch mit aktivierbaren Klebstoffen eine deutlich verbesserte Klebfestigkeit erreicht wird. Gegebenenfalls kann die aufgebrachte aktivatorhaltige Haftvermittlerschicht anschließend silanisiert werden, wodurch Festigkeit und Langzeitbeständigkeit der Verklebung noch weiter verbessert werden. Nach einer Ausführungsform der Erfindung wird auf die vorbehandelte Substratoberfläche ein aktivierbarer Klebstoff, vorzugsweise ein anaerober Klebstoff aufgetragen.

Vorzugsweise wird als Sandstrahlmittel, das aus der EP-A-0 326 097 bekannte Sandstrahlmittel verwendet. Den drei Komponenten (A), (B) und (C) dieses Sandstrahlmittels wird der Aktivator zugemischt.

Beim erfindungsgemäßen Verfahren können Holz-, Metall-, Keramik-, Glas- oder Kunststoffoberflächen eingesesetzt werden, bevorzugt werden Metall- und Kunststoffoberflächen eingesetzt.

Das erfindungsgemäße Verfahren kann auf beliebigen Anwendungsgebieten eingesetzt werden. So können beispielsweise die oben genannten Cyanacrylatklebstoffe erfindungsgemäß durch Einfügen von Aminen oder anderen basischen Stoffen in das Sandstrahlmittel aktiviert werden. Vorzugsweise wird das erfindungsgemäße Verfahren jedoch auf dem Gebiet der anaeroben Klebstoffe verwendet.

Es können beliebige Mengen Aktivator dem Strahlgut zugemischt werden, beispielsweise 0,001 bis 25 Gew.-% Aktivator, bezogen auf das Gewicht des Sandstrahlmittels. Vorzugsweise werden jedoch 0,1 bis 10 Gew.-% und besonders bevorzugt 1 bis 10 Gew.-% Aktivator, bezogen auf das Gewicht des Sandstrahlmittels, zugemischt.

Bei dem Aktivator handelt es sich vorzugsweise um ein Metallpulver und/oder ein Pulver eines oder mehrerer Metallsalze. Besonders bevorzugt sind Kupfer; Kupfersalze, z.B. Kupfersulfat oder Kupferprocetonat (Bis-(1-phenyl-1,3-pentandionato)Cu(II)); Eisen und Eisensalze, z.B. Eisensulfat. Der Aktivator kann auch ein Amin und/oder eine Ammoniumverbindung und/oder eine andere basische Verbindung sein.

Die nach dem erfindungsgemäßen Verfahren vorbereiteten Substratoberflächen können mit allen bekannten anaeroben Klebstoffen behandelt werden (s. beispielsweise G. Habenicht in "Kleben", Springer Verlag, 1986, S. 15 ff.), beispielsweise mit Diacrylsäureestern, wie Tetraethylenglykoldimethacrylat, Tetraethylenglykoldiacrylat, Hexandioldiacrylat u. ä. Es können auch polyfunktionelle Acrylate eingesetzt werden, z.B. Trimethylolpropantriacrylat oder Pentaeretrittetraacrylat. Gut geeignet sind generell Acrylsäure- und Methacrylsäureester mono- und polyfunktioneller Alkohole. Zur Haftungsverbesserung kann es günstig sein, den Massen hydroxyfunktionelle Acrylate wie Hydroxyethylmethacrylat oder Hydroxypropylmethacrylat oder aber auch geringere Mengen der freien Methacrylsäure zuzusetzen. Als Katalysator enthalten die Massen peroxydische Verbindungen, vorzugsweise Hydroperoxyde, z.B. Cumolhydroperoxyd.

Die Komponenten (A), (B) und (C) der bevorzugten Sandstrahlmittel sowie ihre bevorzugten Ausführungsformen sind aus den EP-A-0 326 097 und DE-B-38 02 043 bekannt.

Als Komponente (A) werden eingesetzt 0,01 bis 90 Gew.-%, bezogen auf das Gewicht des Sandstrahlmittels, gegebenenfalls silanisiertes Material mit einer Korngröße < 5 $\mu$m und einer größeren Härte als die der Substratoberfläche, bevorzugt 0,1 bis 30 Gew.-%, insbesondere eines Materials mit einer Korngröße < 1 $\mu$m. Besonders bevorzugt ist Material (A) mit einer Korngröße < 0,1 $\mu$m, wobei hier wie im folgenden unter "Korngröße" die Primärpartikelgröße gemeint ist.

Die Härte des Substrats und der Komponente (A) kann nach den Methoden von Mohs, Brinell, Knoop oder Vickers bestimmt werden, wobei für die Härteprüfung von Substrat und (A) jeweils die gleiche Methode verwendet werden soll. Bei der Härteprüfung von sehr feinem Material (< 1 $\mu$m) verwendet man das gleiche Material in gröberer Form. Mit der erfindungsgemäßen Verwendung der Komponente (A), deren Härte größer ist als die Härte des Substrats, wird eine um mindestens 30 %, vorzugsweise 50 % erhöhte Haftfestigkeit erzielt, als beim Sandstrahlen ohne die Komponente (A).

In einer bevorzugten Ausführungsform ist das als Komponente (A) verwendete Material silanisiert.

Vorzugsweise setzt man als Komponente (A) siliciumhaltiges Material ein, ganz besonders 0,01 bis 50 Gew.-% gegebenenfalls silanisiertes, siliciumhaltiges Material.

Besonders bevorzugt als Komponente (A) sind: Quarz, Quarzglas, Silikatglas mit mindestens 10 Gew.-% Silicium, Siliciumcarbid, Siliciumnitrid und/oder pyrogene Kieselsäure; Aluminiumoxid, Titandioxid und/oder Zirkondioxid sowie die Oxide, Nitride und/oder Carbide der dritten und vierten Hauptgruppe sowie der Nebengruppe 4b. Dieses Material kann beispielsweise eine mittlere Korngröße von 10 $\mu$m besitzen, es muß jedoch noch mindestens 0,01 Gew.-% Anteil an gegebenenfalls silanisiertem Material < 5 $\mu$m enthalten. Ganz besonders bevorzugt ist pyrogene Kieselsäure mit einer mittleren Korngröße von 0,001 bis 0,05 $\mu$m.

Die Komponente (A) muß unter den Reaktionsbedingungen inert sein. Bevorzugte Komponenten (A) sind auch bei Aufschlagstemperaturen > 1000°C inert.

Als Komponente (B) finden Verwendung 20 bis 100 Gew.-%, bezogen auf das Gewicht des Sandstrahlmittels, silanisiertes, siliciumhaltiges Material mit einer mittleren Korngröße von 2 bis 200 $\mu$m; bevorzugt verwendet werden können 50 bis 100 Gew.-% mit einer bevorzugten mittleren Korngröße von 5 bis 100 $\mu$m. Als silanisiertes siliciumhaltiges Material verwendet werden können beispielsweise Quarz, Quarzglas, Silikatglas mit mindestens 10 Gew.-% Silicium, Siliciumnitrid, Siliciumcarbid oder keramisches Material mit mindestens 10 Gew.-% Silicium. Besonders bevorzugt werden Quarzglas, Silikatglas sowie amorphes Siliciumnitrid. Bei der Verwendung von Silikatgläsern und siliciumhaltigem keramischem Material werden Materialien mit einem Siliciumgehalt > 30 Gew.-% bevorzugt.

Das erfindungsgemäß als (C) zu verwendende Sandstrahlmittel mit einer mittleren Korngröße > 5 $\mu$m ist beispielsweise Aluminiumoxid (Korund). Die mittlere Korngröße beträgt vorzugsweise > 5 bis 500 $\mu$m, insbesondere 20 bis 250 $\mu$m. Vorteilhaft können aber auch Quarz, Quarzglas, Silikate, Silikatgläser, Siliciumnitrid, Siliciumcarbid oder keramisches Material mit einem Siliciumgehalt verwendet werden.

Vorzugsweise verwendet man als Komponenten (A) und/oder (B) und (C) ein Material gleicher Zusammensetzung, aber unterschiedlicher Korngröße.

Wenn Bestandteile des Sandstrahlmittels silanisiert sind, so enthalten sie vorzugsweise 0,1 bis 20 Gew.-% Silan, besonders bevorzugt 1 bis 5 Gew.-%, bezogen auf das Gewicht des Bestandteils des Sandstrahlmittels. Die Silanisierung erfolgt in an sich bekannter Weise, wie sie z.B. in der Füllstofftechnologie verwendet wird. Alle üblicherweise eingesetzten Silane eignen sich zum Herstellen der erfindungsgemäß verwendeten Bestandteile des Sandstrahlmittels, besonders geeignet sind Vinyltrimethoxysilan, $\gamma$-Glycidox-ypropyltrimethoxysilan, $\gamma$-Methacroyloxypropyltrimethoxysilan und Tetramethyldivinylsilazan. Die Verbindungen werden vorzugsweise in Form alkoholischer oder wässrigsaurer - z.B. essigsaurer - Lösung verwendet.

Die Silanisierung der aufgebrachten siliciumhaltigen Haftvermittlungsschicht erfolgt in an sich bekannter Weise. Bevorzugt verwendete Silane sind Vinyltrimethoxysilan, γ-Glycidoxypropyltrimethoxysilan, γ-Methacroyloxypropyltrimethoxysilan und Tetramethyldivinylsilazan. Die Verbindungen werden vorzgusweise in Form alkoholischer oder wässrigsaurer - z.B. essigsaurer - Lösung verwendet.

Es hat sich als besonders vorteilhaft erwiesen, sowohl bei der Silanisierung von Bestandteilen des Strahlmittels als auch bei der Silanisierung der erfindungsgemäß behandelten Oberfläche jeweils Silane mit den gleichen funktionellen Gruppen einzusetzen, wie sie auch im Monomeren des Kunststoffs, z.B. des Klebers, vorhanden sind. So setzt man zum Verkleben von Metallen mit Epoxyharzen beispielsweise vorteilhaft Silane mit Epoxyendgruppen ein.

Zur weiteren Erläuterung der Erfindung dienen die im folgenden aufgeführten Beispiele, in welchen anhand von Modellversuchen gezeigt wird, daß das erfindungsgemäße Verfahren zu einer überraschend hohen Haftfestigkeit führt.

Beispiele

1. Anaerobe Verklebung von Polypropylen

Die Wirkung des Verfahrens wird beim Verkleben von Polypropylen gezeigt. Verklebt wurden Prüfkörper aus Polypropylen mit den Dimensionen 60 mm x 25 mm x 6 mm. Hergestellt wurden einschnittig überlappte Zug-Scher-Prüfkörper mit einer Überlappungslänge von 12 mm und einem definierten Klebespalt von 0,2 mm, der mittels Distanzhalter definiert wurde (Klebstoff DELO ML 187 - Klebstoff auf Dimethacrylat-Basis).

Die Vorbehandlungsverfahren bestanden

a) aus Sandstrahlen mit einem Edelkorund von 110 μ und

b) anschließendes Auftragen eines käuflichen Aktivators für anaerobe Klebstoffe (Aktivator Nr. 2 der Fa. DELO - Aktivator auf Kupferbasis).

c) Sandstrahlen mit einem im Beispiel 18 der DE-B-38 02 043 beschriebenen Sandstrahlmittel auf der Basis von Edelkorund mit einer Beimengung von 1 % Kupferpulver (1 Gew.-% unsilanisierte pyrogene Kieselsäure mit einer mittleren Korngröße von ca. 0,04 μm, 99 Gew.-% $Al_2O_3$ mit einer mittleren Korngröße von ca. 110 μm und 1 Gew.-% Kupferpulver).

d) Sandstrahlen mit dem unter c) beschriebenen Strahlgut und anschließendem Auftragen eines acrylfuntionellen Haftvermittlers (γ-Methacryloxypropyltrimethoxysilan).

| Vorbehandlung | Zug-Scherfestigkeit $N/mm^2$ | Bemerkung |
|---|---|---|
| a) | 0 | unvollständige Aushärtung |
| b) | 0,37 | |
| c) | 1,12 | |
| d) | 2,75 | |

Bei nur sandgestrahlten Kunststoffkörpern tritt keine Klebfestigkeit auf, da in diesem Fall die katalytische Wirkung von Metallionen fehlt. Durch Aufrauhen der Oberfläche durch diesen Sandstrahlprozeß, wie unter b) und dem anschließenden Auftrag eines Aktivators, der eine Kupfersulfatlösung enthält, lassen sich geringe Klebfestigkeiten erzielen. Der Klebstoff ist fest auspolymerisiert, zeigt jedoch - wie die Meßergebnisse veranschaulichen - nur geringe adhäsive Kräfte.

Unter Verwendung einer Beimengung von 1 % Kupferpulver im Sandstrahlgut gelingt es, Metalle so fest in die Oberfläche einzubauen, daß eine wesentlich höhere Klebfestigkeit erzielt werden kann. Dies wird unter Punkt d) noch verstärkt durch die Verwendung eines geeigneten acrylfunktionellen Haftvermittlers (Silans).

2. Alterungsuntersuchungen an anaerob verklebten Polypropylenprüfkörpern

Gemäß Beispiel 1 wurden Prüfkörper wie dort beschrieben hergestellt. Es wurde jedoch der Klebstoff DELO ML 118 (ein Klebstoff auf Dimethacrylat-Basis) verwendet.

Überprüft wurde die Alterungsbeständigkeit der Klebeverbindung. Gealtert wurden die Klebeverbindungen 1 und 2 Monate in einem Salzsprühnebel bei 40 °C und in 70 °C warmem, destilliertem Wasser in Anlehnung. Die folgende Tabelle gibt die erreichten Zug-Scherfestigkeiten an. Die Bezeichnung der Vorbehandlungsmethode ist Beispiel 1 entnommen.

| Vorbehand- lung | Zug-Scherfestigkeiten N/mm² | | | | | Bemerkung |
|---|---|---|---|---|---|---|
| | Anfangs- wert | Salzsprühtest 1Monat | 2Monate | Wasserlagerung 1Monat | 2Monate | |
| a | 0 | - | - | - | - | unvollständige |
| b | 0,5 | 0 | 0 | 0 | 0 | Aushärtung |
| d | 4,8 | 5,8 | 6,3 | 5,1 | 5,4 | |

Lediglich die mit der in dieser Anmeldung beschriebenen Methode vorbehandelten Fügeteile (d) haben nach der Alterung noch hohe Festigkeiten. Die Werte nehmen sogar aufgrund der Nachvernetzung der Klebstoffe noch zu.

3. Anaerobe Verklebung von Aluminium

Verklebt wurden Prüfkörper der Dimension 60 mm x 25 mm x 1,6 mm für eine Zug-Scher-Prüfung an einschnittig überlappten Zug-Scher-Prüfkörpern mit der Überlappungslänge von 12 mm und einem definierten Klebespalt von 0,2 mm.

Die Verklebungen wurden durchgeführt an der Aluminiumlegierung AlMgSi 0,5.

| Vorbehandlung | Zug-Scherfestigkeit N/mm² | Bemerkung |
|---|---|---|
| a | 7,4 | unvollständige Aushärtung |
| b | 9,8 | |
| c | 13,3 | |
| d | 14,5 | |

Die Vorbehandlungsart ist gemäß Beispiel 1 gekennzeichnet. Die reine Aufrauhung der Oberfläche führt auch hier nur zu geringen Klebfestigkeiten, die dadurch bedingt sind, daß der Klebstoff auch nach 24 Stunden nicht voll ausgehärtet ist. Dies kann durch Auftrag eines Aktivators (Vorbehandlung b) verbessert werden. Eine vollständige Aushärtung der Klebschicht ist zu erkennen. Die adhäsiven Bindungen sind jedoch noch nicht voll ausgenutzt, was das bessere Abschneiden von Vorbehandlung c zeigt. Durch Auftrag des Haftvermittlers kann eine weitere Steigerung durch Vorbehandlung d erreicht werden.

**Patentansprüche**

1. Verfahren zur Vorbereitung einer Substratoberfläche für die Verbindung mit Kunststoff, bei welchem durch Sandstrahlen mit einem Sandstrahlmittel eine Schicht auf die Substratoberfläche aufgebracht wird, und gegebenenfalls die so erhaltene Haftvermittlerschicht anschließend silanisiert wird,
   **dadurch gekennzeichnet**, daß
   dem Sandstrahlmittel ein Aktivator zugemischt wird, der die Erhärtung eines aktivierbaren Klebstoffes katalysiert und/oder beschleunigt.

2. Verfahren nach Anspruch 1, dadurch gekennzeichnet, daß das Sandstrahlmittel, bezogen auf das Gewicht des Sandstrahlmittels, aus
   (A) 0,01 bis 90 Gew.-% gegebenenfalls silanisiertem Material mit einer Korngröße < 5 μm und einer größeren Härte als die der Substratoberfläche und/oder

EP 0 444 701 B1

(B) 20 bis 100 Gew.-% silanisiertem, siliciumhaltigem Material mit einer mittleren Korngröße von 2 bis 200 $\mu$m und zum

(C) Rest aus einem Sandstrahlmittel mit einer mittleren Korngröße > 5 $\mu$m

besteht.

3. Verfahren nach einem der Ansprüche 1 oder 2, dadurch gekennzeichnet, daß 0,001 bis 25 Gew.-% Aktivator, vorzugsweise 0,1 bis 10 Gew.-%, besonders bevorzugt 1 bis 10 Gew.-%, bezogen auf das Gewicht des Sandstrahlmittels, zugemischt werden.

4. Verfahren nach einem der Ansprüche 1 bis 3, dadurch gekennzeichnet, daß der Aktivator ein Metallpulver und/oder ein Pulver eines oder mehrerer Metallsalze ist.

5. Verfahren nach einem der Ansprüche 1 bis 4, dadurch gekennzeichnet, daß der Aktivator ein Amin und/oder eine Ammoniumverbindung und/oder eine andere basische Verbindung ist.

6. Verfahren nach einem der Ansprüche 1 bis 5, dadurch gekennzeichnet, daß auf die Substratoberfläche nach dem Sandstrahlen ein aktivierbarer Klebstoff, vorzugsweise ein anaerober Klebstoff aufgetragen wird.

7. Verwendung des Sandstrahlmittels gemäß Anspruch 1 zur Substratoberflächenvorbehandlung für die Verklebung mit aktivierbaren Klebstoffen, vorzugsweise anaeroben Klebstoffen.

8. Sandstrahlgut, dadurch gekennzeichnet, daß es aus einem Sandstrahlmittel, bestehend aus, bezogen auf das Gewicht des Sandstrahlmittels,

(A) 0,01 bis 90 Gew.-% gegebenenfalls silanisiertem Material mit einer Korngröße < 5 $\mu$m und einer größeren Härte als die der Substratoberfläche und/oder

(B) 20 bis 100 Gew.-% silanisiertem, siliciumhaltigem Material mit einer mittleren Korngröße von 2 bis 200 $\mu$m und zum

(C) Rest aus einem Sandstrahlmittel mit einer mittleren Korngröße > 5 $\mu$m

und

0,001 bis 25 Gew.-% Aktivator, vorzugsweise 0,1 bis 10 Gew.-%, besonders bevorzugt 1 bis 10 Gew.-%, bezogen auf das Gewicht des Sandstrahlmittels, besteht.

**Claims**

1. Process for preparing a substrate surface for joining to plastics material, in which a layer is applied to the substrate surface by sand-blasting with a sand-blasting agent and, if need be, the thus-obtained adhesion-promoter layer is subsequently silanized, characterized in that, an activator which catalyses and/or accelerates the hardening of an activatable adhesive is added to the sand-blasting agent.

2. Process according to claim 1, characterized in that the sand-blasting agent comprises, relative to the weight of the sand-blasting agent,

(A) 0.01 to 90 wt-% of an optionally silanized material with a particle size < 5 $\mu$m and a greater hardness than that of the substrate surface and/or

(B) 20 to 100 wt-% silanized, silicon-containing material with an average particle size of 2 to 200 $\mu$m and

(C) the remainder a sand-blasting agent with an average particle size > 5 $\mu$m.

3. Process according to one of claims 1 or 2, characterized in that 0.001 to 25 wt-% activator, preferably 0.1 to 10 wt-%, especially preferably 1 to 10 wt-%, relative to the weight of the sand-blasting agent, is added.

4. Process according to one of claims 1 to 3, characterized in that the activator is a metal powder and/or a powder of one or more metal salts.

5. Process according to one of claims 1 to 4, characterized in that the activator is an amine and/or an ammonium compound and/or another basic compound.

6

6. Process according to one of claims 1 to 5, characterized in that, after the sand-blasting, an activatable adhesive, preferably an anaerobic adhesive, is applied to the substrate surface.

7. Use of the sand-blasting agent according to claim 1 to pretreat substrate surfaces for bonding with activatable adhesives, preferably anaerobic adhesives.

8. Sand-blasting material, characterized in that it is composed of a sand-blasting agent comprising, relative to the weight of the sand-blasting agent,
   (A) 0.01 to 90 wt-% of an optionally silanized material with a particle size < 5 $\mu$m and a greater hardness than that of the substrate surface and/or
   (B) 20 to 100 wt-% silanized, silicon-containing material with an average particle size of 2 to 200 $\mu$m and
   (C) the remainder a sand-blasting agent with an average particle size > 5 $\mu$m
   and
   0.001 to 25 wt-% activator, preferably 0.1 to 10 wt-%, especially preferably 1 to 10 wt-%, relative to the weight of the sand-blasting agent.

**Revendications**

1. Procédé de préparation de la surface d'un substrat en vue de sa liaison avec une matière plastique, selon lequel on dépose une couche sur la surface du substrat par sablage au moyen d'un agent de sablage et on procède éventuellement ensuite à une silanisation de la couche d'auxiliaire d'adhérence ainsi obtenue, caractérisé en ce qu'on ajoute à l'agent de sablage un activateur qui catalyse et/ou accélère le durcissement d'une substance adhésive pouvant être activée.

2. Procédé selon la revendication 1, caractérisé en ce que l'agent de sablage est constitué, sur la base du poids d'agent de sablage :
   (A) de 0,01 à 90 % en poids d'une matière, éventuellement silanisée, ayant une taille de particule < 5 $\mu$m et une dureté supérieure à celle de la surface du substrat et/ou
   (B) de 20 à 100 % en poids d'une matière contenant du silicium et silanisée, ayant une taille moyenne de particule comprise entre 2 et 200 $\mu$m,
   (C) le complément étant constitué d'un agent de sablage ayant une taille moyenne de particule > 5$\mu$m.

3. Procédé selon l'une des revendications 1 et 2, caractérisé en ce qu'on ajoute 0,001 à 25 % en poids d'activateur, de préférence 0,1 à 10 % en poids et, mieux, 1 à 10 % en poids, sur la base du poids d'agent de sablage.

4. Procédé selon l'une des revendications 1 à 3, caractérisé en ce que l'activateur est une poudre métallique et/ou une poudre d'un ou plusieurs sels métalliques.

5. Procédé selon l'une des revendications 1 à 4, caractérisé en ce que l'activateur est une amine et/ou un composé d'ammonium et/ou un autre composé basique.

6. Procédé selon l'une des revendications 1 à 5, caractérisé en ce qu'après le sablage, on dépose sur la surface du substrat une substance adhésive pouvant être activée, de préférence une substance adhésive anaérobie.

7. Application de l'agent de sablage selon la revendication 1 au traitement préalable de surfaces de substrat en vue d'un collage au moyen de substances adhésives pouvant être activées, de préférence de substances adhésives anaérobies.

8. Matière de sablage, caractérisée en ce qu'elle est constituée :
    d'un agent de sablage constitué, sur la base du poids d'agent de sablage :
    (A) de 0,01 à 90 % en poids d'une matière, éventuellement silanisée, ayant une taille de particule < 5 $\mu$m et une dureté supérieure à celle de la surface du substrat et/ou
    (B) de 20 à 100 % en poids d'une matière contenant du silicium et silanisée, ayant une taille moyenne de particule comprise entre 2 et 200 $\mu$m,

(C) le complément étant constitué d'un agent de sablage ayant une taille moyenne de particule > 5μm

et de 0,001 à 25 % en poids, de préférence 0,1 à 10 % en poids et, mieux, de 1 à 10 % en poids d'activateur sur la base du poids d'agent de sablage.